(19) Europäisches Patentamt
European Patent Office
Office européen des brevets

(11) EP 2 378 314 A2

(12) EUROPEAN PATENT APPLICATION

(43) Date of publication:
19.10.2011 Bulletin 2011/42

(51) Int Cl.:
G01T 7/00 (2006.01)

(21) Application number: 11162144.7

(22) Date of filing: 12.04.2011

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 13.04.2010 US 323574 P

(71) Applicant: Morpho Detection, Inc.
Newark, CA 94560 (US)

(72) Inventors:
• Yanoff, Brian David
Niskayuna, NY 12309 (US)
• Dixon, Walter Vincent III
Niskayuna, NY 12309 (US)
• Du, Yanfeng
Niskayuna, NY 12309 (US)
• Krahnstoever, Nils
Schenectady, NY 12309 (US)
• Pan, Feng
Niskayuna, NY 12309 (US)

(74) Representative: Smaggasgale, Gillian Helen
W.P. Thompson & Co
55 Drury Lane
London WC2B 5SQ (GB)

(54) **Target-Linked Radiation Imaging System**

(57) An imaging detection system (200) includes at least one location detection device (208) configured to determine coordinates of a target (228), at least one detector (218) configured to detect events from a source (230) associated with the target, and a processor (222) coupled in communication with the at least one location detection device and the at least one detector. The processor is configured to receive the coordinates from the at least one location detection device and the events from the at least one detector, translate the events using the coordinates acquired from the at least one location detection device to compensate for a relative motion between the source and the at least one detector, and output a processed data set having the events translated based on the coordinates.

Figure 7

## Description

CROSS REFERENCE TO RELATED APPLICATIONS

This application claims the benefit of U.S. Provisional Application No. 61/323,574 filed April 13, 2010, which is hereby incorporated by reference in its entirety.

STATEMENT REGARDING FEDERALLY SPONSORED RESEARCH & DEVELOPMENT

This invention was made with United States government support under contract HSHQDC-08-C-00137, awarded by th e Domestic Nuclear Detection Office (DNDO) Organization. The United States government may have certain rights in the invention.

BACKGROUND OF THE INVENTION

The embodiments described herein relate generally to contraband imaging systems and, more particularly, to contraband imaging systems that track an object associated with the contraband.
At least some known radiation imaging systems detect contraband. As used herein, the term "contraband" refers to illegal substances, explosives, narcotics, weapons, special nuclear materials, dirty bombs, nuclear threat materials, a threat object, and/or any other material that a person is not allowed to possess in a restricted area, such as a border crossing. One known radiation imaging system can determine a direction from a detector to a radiation source when the radiation source is stationary. However, when the radiation source is moving, gamma rays from the source arrive at the detector from a plurality of angles that change over time. The motion of the source with respect to the detector leads to smearing of a radiation image generated from the detector data. Further, the generated radiation image is biased because more events are detected when the source is closer to the detector as compared to when the source is located farther from the detector. When a radiation image is distance-biased, it appears that the source is at an angle corresponding to a distance of closest approach to the detector, rather than at its true location.
At least another known system attempts to image moving radiation sources using coded-aperture gamma cameras. The coded-aperture cameras include a coded mask and a position sensitive detector. The coded mask includes a pattern of transparent material and opaque material, which attenuates X-rays in a target energy range. The position sensitive detector has a spatial pattern sufficiently matching a grid size of the coded mask pattern. Photons from a certain direction project the coded mask onto the position sensitive detector. The photon projection has the same coding pattern as the mask, but is shifted on a detector plane. The shift correlates with a direction of the incident X-rays. Because the detector can detect any X-rays within an observed space, a relatively large accumulation of X-rays is needed for the coded-aperture gamma camera to be effective.

BRIEF SUMMARY OF THE INVENTION

In one aspect, an imaging detection system is provided. The imaging detection system includes at least one location detection device configured to determine coordinates of a target, at least one detector configured to detect events from a source associated with the target, and a processor coupled in communication with the at least one location detection device and the at least one detector. The processor is configured to receive the coordinates from the at least one location detection device and the events from the at least one detector, translate the events using the coordinates acquired from the at least one location detection device to compensate for a relative motion between the source and the at least one detector, and output a processed data set having the events translated based on the coordinates.
In another aspect, an imaging detection system is provided. The imaging detection system includes a tracking system having a location detection device. The tracking system is configured to determine coordinates of a target based on data acquired from the location detection device. The imaging system further includes a detection system having a detector. The detection system is configured to detect events from a source associated with the target based on data acquired from the detector. A processor is coupled in communication with the tracking system and the detection system. The processor is configured to receive the coordinates from the tracking system and the events from the detection system, translate the events using the coordinates from the tracking system to compensate for a relative motion between the source and the detector, and output a processed data set having the events translated based on the coordinates.
In still another aspect, a method for generating an image of a source moving with respect to a detector is provided. The method includes acquiring real-world coordinates of a target associated with the source using a location detection device, detecting events from the source using the detector, translating the events using the real-world coordinates to compensate for a relative motion between the source and the detector, and generating the image having the events translated to intersect generally at a center of a field of view of the image.

BRIEF DESCRIPTION OF THE DRAWINGS

Figures 1-9 show exemplary embodiments of the system and methods described herein.

Figure 1 is a schematic illustration of a geometric relationship for Compton imaging.

Figure 2 is a graph representing a backprojection of multiple gamma rays from a stationary source.

Figure 3 is a schematic illustration of a radiation source moving relative to a detector.

Figure 4 is a graph representing a backprojection of multiple gamma rays from the moving source shown in Figure 3.

Figure 5 is a graph representing a backprojection of multiple gamma rays from the moving source shown in Figure 4 with a motion of the source compensated for.

Figure 6 is a schematic illustration of exemplary motion compensated radiation imaging.

Figure 7 is a schematic illustration of an exemplary target-linked radiation imaging system.

Figure 8 is a schematic illustration of a tracking system that may be used with the target-linked radiation imaging system shown in Figure 7.

Figure 9 are graphs representing non-compensated radiation images and compensated radiation images.

DETAILED DESCRIPTION OF THE INVENTION

The target-linked radiation imaging (TLRI) system described herein combines radiation imaging with real-time target tracking to detect moving radiation sources with greater sensitivity as compared to known radiation imaging systems. More specifically, in the exemplary embodiment, the TLRI system uses sophisticated real-time tracking to simultaneously monitor locations of multiple targets and report the locations in three-dimensional (3D) world coordinates. A processor and/or a server synchronizes the locations of the sources with real-time gamma ray detection data from at least one cadmium zinc telluride (CZT) Compton imaging detector. By compensating for the motion of the sources, the TLRI system detects weaker sources in a shorter time while they are in continuous motion.

Although detection of gamma rays is described herein, it should be understood that the TLRI system can be used with any sensing technology that detects a direction from a source to the detector. In the exemplary embodiment, the TLRI system is used when signals accumulate over time to achieve a desired signal-to-noise ratio. Further, the herein-described TLRI system can be used to translate any suitable events generated by a moving source. As used herein, the term "event" refers to the detection of any suitable type of radiation, such as a gamma ray, light, microwave, and/or millimeter wave, from a source. An event can be recorded as a discrete signal or a continuously variable signal. When the event has a continuously variable signal, the continuously variable signal is divided into predetermined time intervals that are each considered to be an event. In a particular embodiment, the time interval is selected to be a duration during which a target does not move far, i.e. 1 millisecond (ms). Examples of events include, but are not limited to, a gamma ray producing a discrete energy deposition in the detector, and millimeter wave imaging producing an image from a short time interval as a continuously variable signal.

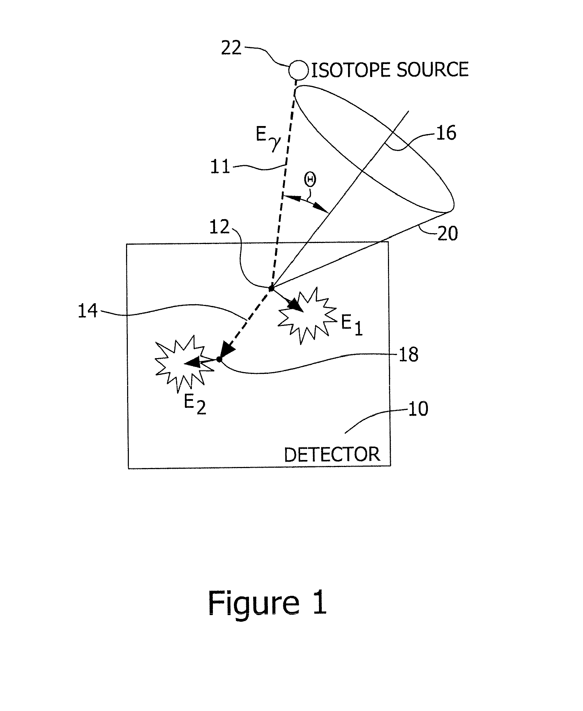

Referring to Figure 1, a TLRI system described herein uses Compton imaging to locate a radiation source. Compton imaging is a method that determines the energy and incident direction of detected gamma rays in a radiation detector 10. When a gamma ray 11 having an energy Ey interacts with radiation detector 10, one possible interaction process is a Compton scatter event. When this occurs in the detector, part of the gamma ray's energy $E_1$ is deposited in detector 10 at a point of interaction 12 while the remainder of energy $E_2$ is retained by a scattered gamma ray 14. The Compton relation, based on the conservation of energy and momentum constrains the relationship between the energy transfer between gamma ray 11 and detector 10 and an angle of scatter $\Theta$:

$$\cos(\Theta) = 1 - \frac{mc^2 E_1}{E_2^2 + E_1 E_2}, \qquad\qquad (\text{Eqn. 1})$$

where $E_1$ is the energy of gamma ray 11 deposited in the scatter event, $E_2$ is the remaining energy of the gamma ray, $mc^2$ is the rest energy of an electron that absorbs the energy $E_1$, and angle $\Theta$ is defined relative to an axis 16 connecting two interaction points 12 and 18. If scattered gamma ray 14 is subsequently absorbed in detector 10 there is sufficient information to reconstruct an incident direction of gamma ray 11.

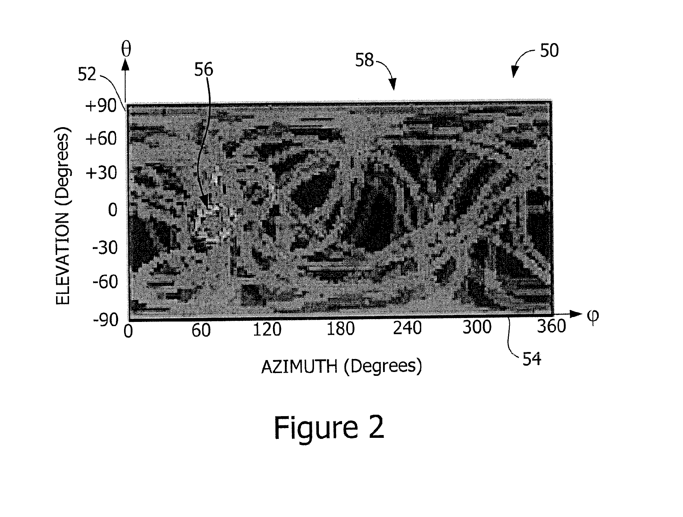

As shown in Figure 1, angle $\Theta$ defines an opening angle of a cone 20 with axis 16 along a line connecting two interaction points 12 and 18 in detector 10. Based on the measurements of interaction points 12 and 18 and energies, gamma ray 11 is known to have originated from a direction on a surface of cone 20. Because of symmetry in the scatter process, a specific azimuthal angle around cone 20 cannot be determined for an individual gamma ray. However, when

**EP 2 378 314 A2**

multiple gamma rays are detected from the same source 22, each gamma ray contributes its own different cone because the energy and angles of scatter will vary from one event to another. The cones overlap at a true source angle, allowing a direction and/or location of source 22 to be determined through a process of backprojection, as shown in Figure 2.

Figure 2 is radiation image 50 of a radiation source that is substantially stationary with respect to a detector. Radiation image 50 has a vertical axis 52 showing an elevation angle in degrees and a horizontal axis 54 showing an azimuth angle in degrees. Radiation image 50 is a two-dimensional (2D) array of angular positions with respect to a detector. More specifically, each point in radiation image 50 has coordinates in terms of elevation angle ($\theta$) and azimuth angle ($\varphi$) with respect to the detector. Each point ($\theta$, $\varphi$) has a corresponding cone associated therewith and shown in radiation image 50. In radiation image 50, each cone has a finite thickness. Pixels in radiation image 50 are associated with at least one cone, unless no event is detected. Where cones overlap, pixels are associated with more than one cone.

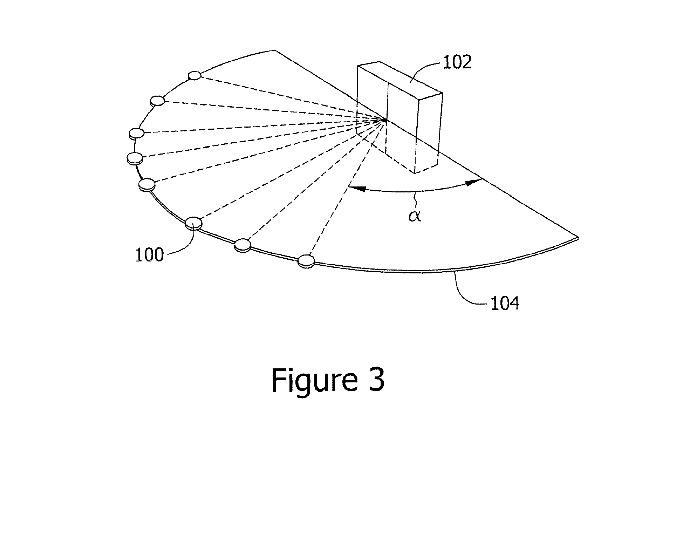

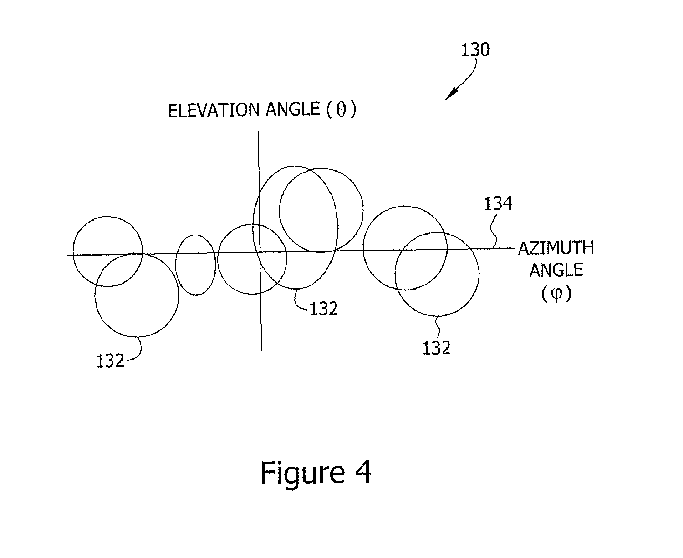

More specifically, as detected events accumulate, cones begin to overlap in an area 56 of radiation image 50, while cones remain spaced apart in a remainder 58 of radiation image 50. A location of a source corresponds with overlap area 56. As such, when the radiation source is stationary, an imaging algorithm accumulates multiple overlapping gamma events to determine a source location. However, with existing systems, when the source is moving, the incident angle changes continuously, and the gamma events no longer accumulate coherently, as illustrated in Figures 3 and 4.

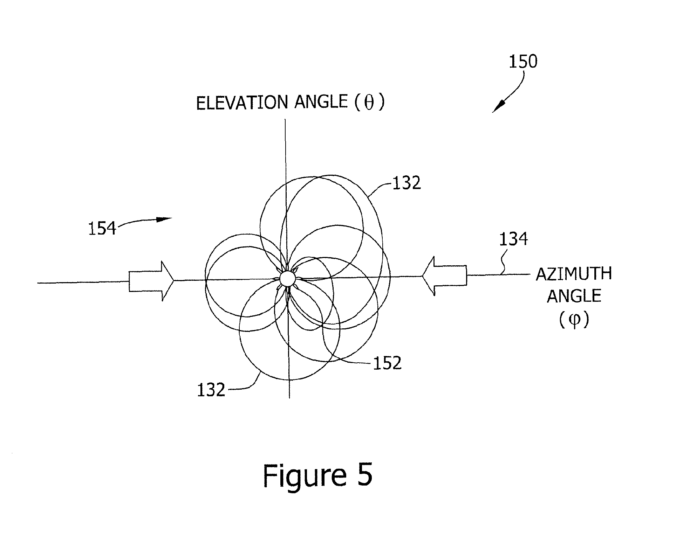

In Figure 3, a source 100 moves with respect to a detector 102 along an arc 104. If a location of source 100 is known by some other means, an angle $\alpha$ between source 100 and detector 102 can be determined before the backprojection of each gamma ray. Figure 4 illustrates an image 130 of event cones 132 detected from a moving source 100 (shown in Figure 3). Because source 100 is moving with respect to detector 102 (shown in Figure 3), cones 132 are spaced apart along an azimuth angle axis 134. As such, cones 132 incoherently accumulate in image 130, or "smear". As shown in an image 150 in Figure 5, the back projection can be continuously adjusted to compensate for the relative motion between source 100 (shown in Figure 3) and detector 102 (shown in Figure 3) such that cones 132 of emissions from source 100 remain at a center 152 of a reconstructed field of view 154. As such, cones 132 accumulate coherently about center 152 of image 150.

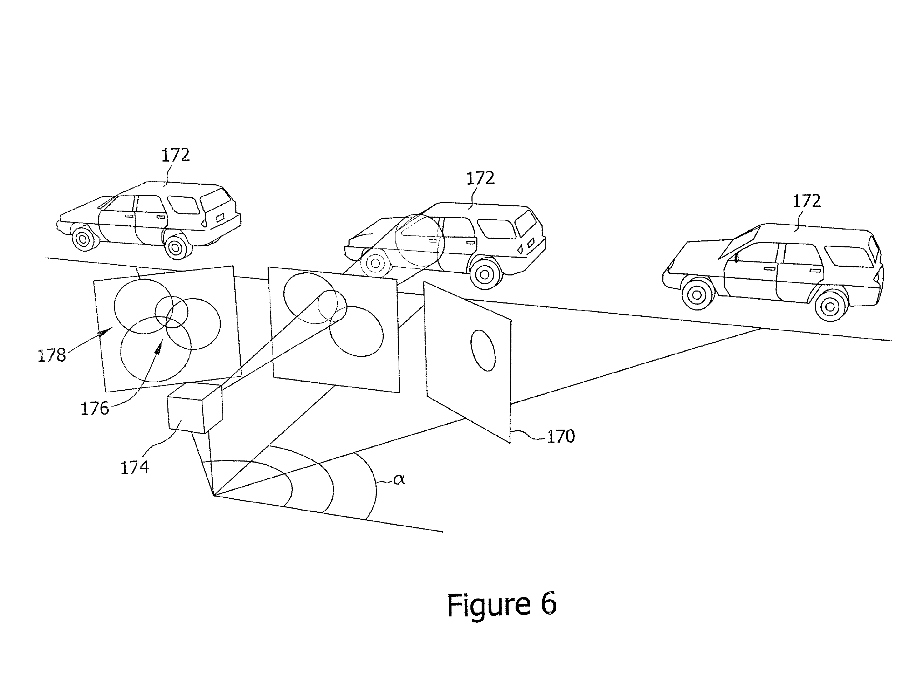

Figure 6 illustrates exemplary motion compensated radiation imaging (MCRI). In the exemplary embodiment, a radiation backprojection image 170 is rotated or translated to follow a target 172 as target 172 moves with respect to a detector 174. By rotating or translating backprojection image 170, target 172 is effectively maintained generally at a center 176 of a reconstructed field of view 178. If target 172 is emitting radiation, detected gamma events will accumulate coherently in backprojection image 170 when the events are translated.

In the exemplary embodiment, the reconstructed image is rotated or translated in a virtual sense in a computer's memory, while the detector remains stationary. MCRI can therefore be applied simultaneously to multiple targets, even if the targets are moving in different directions and/or at different speeds. More specifically, all of the detected events are rotated or translated for each target in the field of view. When a target includes an emitting radiation source, the backprojected detection events will accumulate coherently within the reconstructed image. When a target is a non-radiation emitting target, the events will not align with each other in a backprojection image and will blend into the background of the image. As such, the target having a radiation source can be distinguished from other, non-radiation-emitting targets in the field of view. In a particular embodiment, predetermined criteria are used to distinguish radiation-emitting targets from non-radiation-emitting targets in the field of view. For example, the predetermined criteria can be at least partially based on a level of coherency of the accumulation the events and/or alignment of the events with the center of a reconstructed image, as described in more detail below.

There are numerous ways that real-time locations of targets can be determined. The accuracy of the tracked location, response latency, and/or other factors will impact performance of the TLRI system under different scenarios. Although any suitable real-time location determination system can be used with the TLRI system described herein, in the exemplary embodiment, the TLRI system includes a multi-camera, real-time video tracking system to determine target locations, velocity, pose, orientation, shape, and/or any other suitable information relating to a target. In one embodiment, target locations are reported in real world coordinates by establishing an accurate mapping of the imaging plane of each camera into a 3D world model. Alternatively, 2D modeling can be used. In the exemplary embodiment, the model determines at least a location of the target with respect to time.

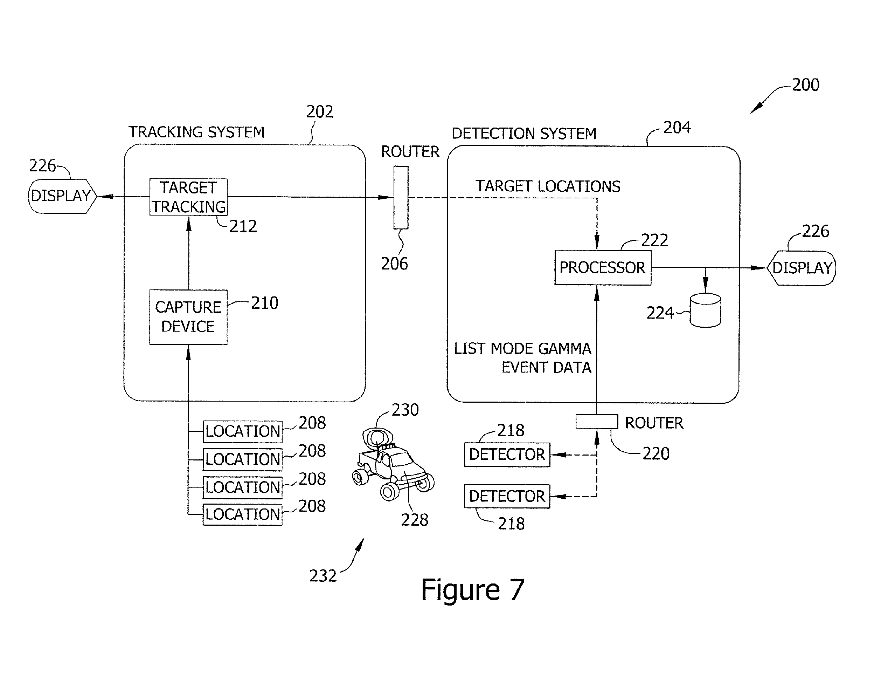

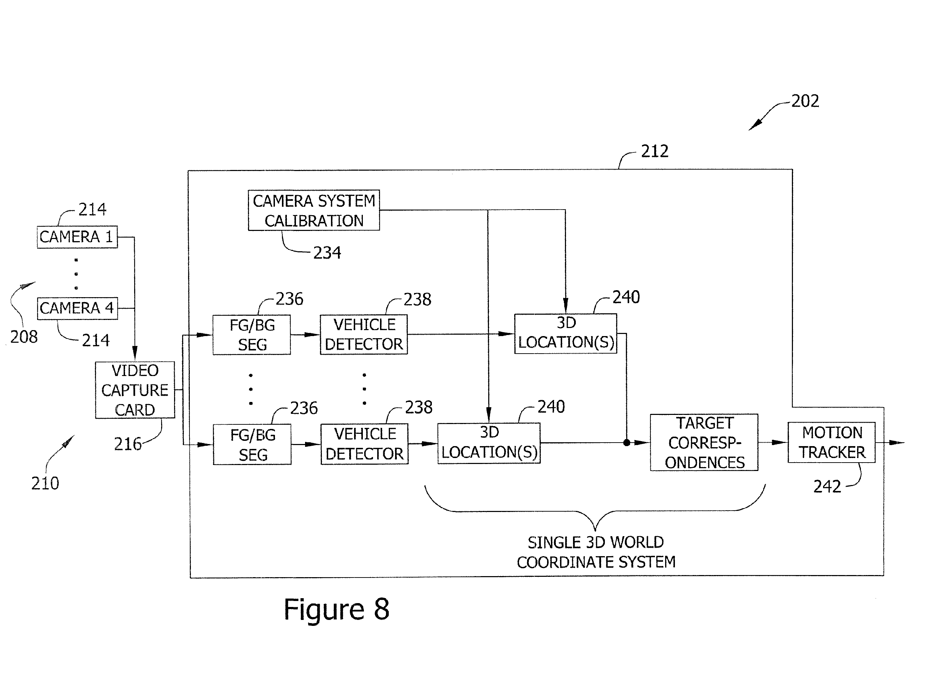

Figure 7 is a schematic illustration of an exemplary target-linked radiation imaging (TLRI) system 200. TLRI system 200 is also referred to herein as an imaging detection system. Figure 8 is a schematic illustration of a tracking system 202 than may be used with TLRI system 200. In the exemplary embodiment, TLRI system 200 includes tracking system 202 and a detection system 204 coupled in communication via a first router 206. TLRI system 200 includes any suitable network, such as a WiFi network, that enables the components of TLRI system 200 to communicate data and/or signals to other components of TLRI system 200. Tracking system 202 and detection system 204 can be embodied on separate computers or a single computer. Further, TLRI system 200 can be a distributed system.

Tracking system 202 includes at least one location detection sensor or device 208, a location capture device 210, and a target tracking device 212. More specifically, in the exemplary embodiment, tracking system 202 includes a plurality of cameras 214, an image capture card 216, and target tracking device 212. Cameras 214 are considered to

4

be location detection sensors or devices 208. Alternatively, any suitable location detection sensor or device, such as radar, lidar, millimeter wave imaging, and/or any other suitable imaging and/or tracking technology that enables TLRI system 200 to function as described herein, is used in tracking system 202. In the exemplary embodiment, detection system 204 includes at least one sensor or detector 218, such as a radiation detector, a second router 220, a processor 222, and a data storage device 224. In a particular embodiment, processor 222 is a TLRI server. When more than one radiation detector 218 is used, radiation detectors 218 can be networked together to combine the detected events. At least one display 226 is coupled to tracking system 202 and/or detection system 204.

Tracking system 202 is configured to determine real world coordinates of a target 228 having a radiation source 230 associated therewith. The coordinates of target 228 are transmitted from tracking system 202 to processor 222 via first router 206. Detection system 204 is configured to determine locations of events caused by radiation source 230, and to transmit the event locations to processor 222. Processor 222 uses the coordinates to compensate for relative motion between source 230 and radiation detector 218 to determine a real world location of source target 228 and/or source 230 and track target 228 and/or source 230 as it moves through a tracking field, such as an imaging field 232. In the exemplary embodiment, TLRI system 200 can track a plurality of targets with or without a radiation source associated therewith. In one embodiment, TLRI system 200 can track multiple targets each having a radiation source associated therewith. In a particular embodiment, processor 222 is configured to compensate for a change in pose of target 228 with respect to at least one detector 218. As used herein, the term "pose" refers to a position and orientation of one object with respect to another object.

As shown in Figure 8, tracking system 202 includes multiple location detection devices, such as cameras 214, to track targets by making a correspondence between images from cameras 214 and by building a 3D model of the observed space. To calibrate tracking system 202, precise locations of cameras 214 and radiation detectors 218 (shown in Figure 7) are defined within a model by a calibration unit 234, and correspondence among camera views is determined in the model. In addition to locations and orientations of cameras 214 and radiation detectors 218, the calibration can also include, for each camera 214, lens parameters, such as focal length, skew, and/or pitch, which define how the observed space maps into camera's 214 image. Lens distortion parameters are often included in the calibration, especially for wide field of view lenses.

In the exemplary embodiment, the calibration is a semiautomatic calibration method that uses imagery from cameras 214 to define a geometry of tracking system 202. More specifically, images from cameras 214 are used to back-calculate positions and orientations of cameras 214. To do this, fixed points in the observed space are measured by multiple cameras 214 simultaneously. By determining correspondences between these points in different camera views and building up a sufficient number of such points, an accurate estimate can be made of the camera positions. Tracking system 202 uses a model, such as a wire shape model, and points within images from cameras 214 to track target 228 (shown in Figure 7) and/or source 230 (shown in Figure 7) within the images and determine 3D locations of target 228 and/or source 230 in the real world.

The model in the exemplary embodiment includes information related to how vehicles move to track a target within the images. In one embodiment, tracking system 202 includes a VISIOWAVE® Intelligent Video Platform and/or ULTRAVIEW® Enterprise Video Platform manufactured by UTC Fire & Security of Farmington, CT. Using the real world locations, velocities, and/or orientations, processor 222 can compensate for target's 228 motion in a radiation backprojection image, as described herein.

As shown in Figure 8, tracking system 202 includes a foreground/background segmentation stage 236 that separates the regions in an image that correspond to moving objects from the background of the image. Segmentation stage 236 maintains an internal model of an empty scene of field of view 232 (shown in Figure 7) and performs foreground segmentation by calculating, for every pixel in the image, a probability of the color and intensity of the pixel. Although tracking system 202 is explained below as tracking a vehicle, it should be understood that tracking system 202 is configured to track any suitable target through field of view 232.

In the exemplary embodiment, a vehicle-detection stage 238 detects vehicles by explaining the observed foreground regions by hypothesized vehicles of a typical size, shape, and orientation. In one embodiment, vehicle-detection stage 238 performs a greedy search by iteratively placing vehicle hypotheses into a scene of field of view 232 in a way that at every step a maximum amount of image data is explained. The iterative process ends once no vehicle can be placed in the scene. Tracking system 202 obtains 3D vehicle locations 240 in one of two ways. First, if the vehicle follows an image-based approach that does not rely on geometric information to be known, image-level detections are projected from an image plane into a groundplane, and a groundplane location from within the groundplane projection is selected as 3D location 240 of the vehicle. Second, if vehicle-detection stage 238 relies on 3D vehicle models to be used in conjunction with geometric information about cameras 214 to drive the scale and pose selection process, 3D vehicle locations 240 are given by the 3D model location that is used to drive the detection process. A motion tracker 242 uses the 3D vehicle locations 240 to perform track formation, data association between detections and existing tracks, and track maintenance. For data association, general nearest neighbor algorithms or more complex multi-hypothesis tracking (MHT) assignment strategies can be utilized. For tracking, Extended Kalman filters or particle filters are used to perform the tracking of vehicle observations.

Referring again to Figure 7, detection system 204 detects events from radiation source 230 using at least one radiation detector 218. In a particular embodiment, radiation detector 218 is an intelligent personal radiation locator (IPRL) cadmium zinc telluride (CZT) detector array manufactured by General Electric Company. More specifically, an IPRL detector array is configured to autonomously detect radiation source 230 and discriminate among naturally-occurring radioactive materials, background, medical isotopes, and potential threats or contraband. IPRL detector arrays can determine a direction, a flux, an energy, and an isotope of the detected radiation, while sensing a location and an orientation of itself. In the exemplary embodiment, radiation detector 218 includes a positioning or orientation sensor, such as a global positioning system (GPS) and/or internal orientation sensors, that enable detectors 218 to continuously transform all directional data into real-world coordinates. The positioning or orientation sensor is used when, for example, detector 218 is moving respect to target 228.

Display 226 includes a graphic user interface (GUI) that displays information to a user. The information can be real-time and/or stored data. For example, an uncompensated radiation image, a compensated radiation image, a graph of an X-Y position of the target, a graph of an energy spectrum, and an overlaid video can be displayed to the user on the GUI. In the exemplary embodiment, the overlaid video includes a substantially real-time video showing target 228 being tracked by tracking system 202 with a substantially real-time compensated radiation image superimposed on the video. As such, the user can visually identify target 228 and track target's 228 movement in real-time. A still capture can be generated from the video. Further, in the exemplary embodiment, the GUI can provide information relating to each target being tracked with TLRI system 200 and allow the user to select which target's information to display. It should be understood that the GUI provides any suitable information to the user including, but not limited to, a list of available targets, a motion compensated backprojection image, an uncompensated backprojection image, a number of backprojected gamma rays, an X-Y position of a selected target, a graph of target position with respect to time, a spectrum of the selected target, an energy range used for back projection, a video of the selected target, a still capture of the selected target, an image of the target overlaid with a radiation image, and/or a recording/playback time stamp.

TLRI system 200 is configured to perform a method and/or algorithm to translate detected events to the coordinates of a moving target 228 to compensate for the movement of target 228 with respect to at least one detector 218. More specifically, radiation detector 218 detects Compton scatter to determine a cone for each detected event. The cones for each detected event are backprojected to generate a radiation image. As described above, the radiation image includes an array of points $(\theta, \varphi)$ representing the detected event, wherein an intensity of each point $(\theta, \varphi)$ is determined based on a corresponding cone. Processor 222 transforms each pixel and/or point $(\theta, \varphi)$ of the radiation image into a movement-compensated pixel or point $(\theta', \varphi')$ for each event based on an instantaneous angle between target 228 and detector 218 at a time when the event occurred.

In the exemplary embodiment, the coordinates from tracking system 202 are used to compensate for the movement of radiation source 230 such that the cones are effectively translated to a center point in the radiation image. Any suitable algorithm can be used to calculate the compensation angles for the movement of the radiation source based on the coordinates from the tracking system. In the exemplary embodiment, a rotation matrix is applied to the points $(\theta, \varphi)$ to rotate each point $(\theta, \varphi)$ based on the coordinates of target 228 as determined by tracking system 202. The rotation matrix transforms each point $(\theta, \varphi)$ into a movement-compensated point $(\theta', \varphi')$ by rotating each point $(\theta, \varphi)$ about an X-axis, a Y-axis, and/or a Z-axis of the tracking system coordinate system. As such, the cones are mapped to a new set of points $(\theta', \varphi')$.

A signal associated with each movement-compensated point $(\theta', \varphi')$ is then weighted. More specifically, each cone associated with a point $(\theta', \varphi')$ has a finite thickness or intensity. The thickness or intensity of each cone is based on a certainty of each cone. For example, the more certain the cone is, the thinner the cone, and the less certain the cone is, the thicker the cone is. As such, the signal associated with each point $(\theta', \varphi')$ is weighted based on the certainty of the cone to produce cones of different thickness in the radiation image. Because the points $(\theta', \varphi')$ have been translated, the cones of varying thicknesses, or intensities, will accumulate coherently if the target is a radiation-emitting target.

In the exemplary embodiment, the above-described method is performed for each target 228 within a field of view 232 of TLRI system 200. More specifically, processor 222 assumes that all events within the field of view are emitted from each target and performs the translation and weighting for each target. When the method is performed for a non-radiation-emitting target, the cones will have a relatively low level of coherent accumulation and may generate an image similar to image 130 shown in Figure 4. When the method is performed for a radiation-emitting target, the cones will have a relatively high level of coherent accumulation and may generate an image similar to image 150 shown in Figure 5. Based on the level of coherency, TLRI system 200 and/or an operator of TLRI system 200 determines which target 228, if any, is emitting radiation. In the exemplary embodiment, TLRI system 200 outputs a processed data set, such as an image, of the translated cones for at least one target 228 in field of view 232.

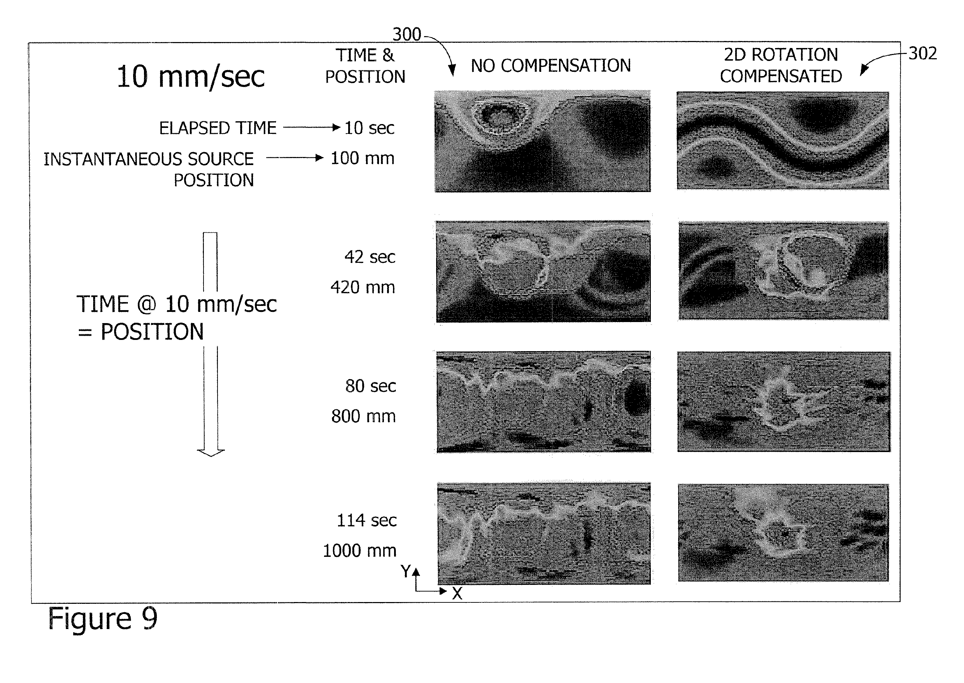

Figure 9 illustrates graphs representing a non-compensated radiation image 300 and a compensated radiation image 302. The graphs represent data acquired during an experiment in which a radiation source was moving at about 10 millimeters (mm) per second (sec) relative to a detector. The series of radiation images in the left column show the same radiation image 300 at different times during the experiment. Radiation image 300 does not include compensation for the movement of the source. Such images may be generated by a known radiation imaging system. The series of radiation images in the right column show the same radiation image 302 at different times during the experiment. Radiation image 302 includes the movement compensation as described above. As such, the radiation image 302 in the right column is an image generated by the herein-described TLRI system 200 (shown in Figures 7 and 8).

In the left column of radiation images 300, the cones are spaced along an X-axis of each radiation image and become more spaced apart as the radiation source moves a farther distance as shown in the bottom radiation image of the left column. As such, the radiation images 300 in the left column appear "smeared" along the X-axis. In contrast, the right column of images 302 shows that the cones are translated to a center of the image, thus compensating for the movement of the source. As can be seen in the lower right-column radiation image 302, the cones overlap and/or intersect near a center of the radiation image rather than being spaced apart along the X-axis. Accordingly, the TLRI system described herein can detect the presence of a radiation source and locate the radiation source. When multiple targets are within the field of view, non-radiation-emitting targets will produce an image similar to non-compensated image 300, and radiation-emitting targets will produce an image similar to compensated image 302.

Although the TLRI or imaging detection system described herein includes a tracking system and a detection system, it should be understood that other suitable sensors can additionally be included in the imaging detection system. In a particular embodiment, a plurality of different types of sensors are used in conjunction with the tracking system, and data from the different types of sensors is fused and integrated coherently. As such, different types sensors are integrated together using the imaging detection system such that many relatively smaller sensors can be added to the imaging detection system incrementally to improve coverage and/or sensitivity of the imaging detection system. The different types of sensors can include non-directional sensors that correlate data with the proximity of the target. Other sensors may be more sophisticated sensors that allow for directionality and further target discrimination. The different types of sensor can be configured to obtain gamma radiation data, neutron data, chemical data, biological data, active inspection data, weight data, and/or any other suitable type of data. For example, the imaging detection system additionally includes a scale that measures a weight of a vehicle as it tracked passed a gamma detector. Assuming a slightly elevated radiation level is detected by the detection system and the weight of the vehicle abnormally heavy indicating, for example, shielding, an operator could further confirm the presence of contraband using a neutron detector.

The above-described TLRI system detects moving radiation sources, such as special nuclear materials (SNM), dirty bombs, other nuclear threat materials, and/or other contraband at, for example, a border crossing and/or a public checkpoint, which has not been possible with known detection systems. Further, the above-described TLRI system can detect weak moving radiation sources by using multiple detectors and the 3D world coordinates from location and/or tracking information. More specifically, by compensating for the motion of the contraband, the detection system described herein produces an image having more overlapping and/or intersecting events as compared to known detection systems that do not compensate for movement of the contraband.

Further, the tracking system described herein enables the TLRI system to report a location of a target for subsequent intervention by law enforcement and/or automated actions such as lowering, or not raising, traffic barriers. The tracking system also enables multiple targets to be tracked and differentiated from each other. Although any suitable radiation imaging technique can be used by the above-described TLRI system, the detection of Compton scattering provides $4\pi$ sensitivity and spectral imaging at higher energies while not requiring a heavy collimator.

In one embodiment, a radiation imaging system is provided. The radiation imaging system includes at least one location detection device configured to determine coordinates of a target, at least one radiation detector configured to detect events from a radiation source associated with the target, and a processor coupled in communication with the at least one location detection device and the at least one radiation detector. The processor is configured to receive the coordinates from the at least one location detection device and the events from the at least one radiation detector, compensate for a relative motion between the radiation source and the at least one radiation detector using the coordinates from the at least one location detection device, and output a radiation image having the events translated based on the coordinates.

In another embodiment, a radiation imaging system is provided. The radiation imaging system includes a tracking system having at least one location detection device. The tracking system is configured to determine coordinates of a target based on data from the at least one location detection device. The radiation imaging system further includes a radiation detection system having at least one radiation detector. The radiation detection system is configured to detect events from a radiation source associated with the target based on data from the at least one radiation detector. A processor is coupled in communication with the tracking system and the radiation detection system. The processor is configured to receive the coordinates from the tracking system and the events from the radiation detection system, compensate for a relative motion between the radiation source and the at least one radiation detector using the coordinates from the tracking system, and output a radiation image having the events translated based on the coordinates.

In still another embodiment, a method for generating a radiation image is provided. The method includes acquiring real-world coordinates of a target using at least one location detection device, detecting events from a radiation source associated with the target using at least one radiation detector, and translating the events using the real-world coordinates to compensate for a relative motion between the radiation source and the at least one radiation detector. The radiation image having the events translated to intersect generally at a center of a field of view of the radiation image is generated.

Exemplary embodiments of a target-linked radiation imaging system are described above in detail. The methods and systems are not limited to the specific embodiments described herein, but rather, components of systems and/or steps of the methods may be utilized independently and separately from other components and/or steps described herein. For example, the methods may also be used in combination with other radiation imaging systems and methods, and are not limited to practice with only the Compton scatter systems and methods as described herein. Rather, the exemplary embodiment can be implemented and utilized in connection with many other radiation detection applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

**Claims**

1. An imaging detection system (200) comprising:

   at least one location detection device (208) configured to determine coordinates of a target (228);
   at least one detector (218) configured to detect events from a source (230) associated with the target; and
   a processor (222) coupled in communication with said at least one location detection device and said at least one detector, said processor configured to:

   receive the coordinates from said at least one location detection device and the events from said at least one detector;
   translate the events using the coordinates acquired from said at least one location detection device to compensate for a relative motion between the source and said at least one detector; and
   output a processed data set having the events translated based on the coordinates.

2. An imaging detection system (200) in accordance with Claim 1 wherein said at least one detector (218) is configured to detect a direction from the source (230) to said at least one detector.

3. An imaging detection system (200) in accordance with Claim 1 wherein said at least one detector (218) is configured to detect at least one of a discrete emission of radiation and a continuously variable signal.

4. An imaging detection system (200) in accordance with Claim 1 wherein said processor (222) is configured to compensate for a change in pose of the target (228) with respect to said at least one detector (218).

5. An imaging detection system (200) in accordance with Claim 1 wherein said at least one location detection device (208) comprises a plurality of cameras (214) configured to acquire real-time video.

6. An imaging detection system (200) in accordance with Claim 1 wherein said at least one detector (218) comprises a Compton imaging detector.

7. An imaging detection system (200) in accordance with Claim 1 wherein said at least one detector (218) is configured to autonomously detect the source (230) and determine whether the source is at least one of a naturally-occurring radioactive material, background, a medical isotope, and potential contraband.

8. An imaging detection system (200) in accordance with Claim 1 wherein at said least one detector (218) comprises an orientation sensor configured to continuously transform detected directional data into real-world coordinates of said detector.

9. An imaging detection system (200) in accordance with Claim 1 wherein said processor (222) is configured to apply a rotation matrix to each point in an initial array of points to rotate each point in the initial array of points based on the coordinates.

10. A method for generating an image of a source (230) moving with respect to a detector (218), the method comprising:

acquiring real-world coordinates of a target (228) associated with the source using a location detection device (208);
detecting events from the source using the detector;
translating the events using the real-world coordinates to compensate for a relative motion between the source and the detector; and
generating the image having the events translated to intersect generally at a center of a field of view of the image.

11. A method in accordance with Claim 10 wherein the detected events form an initial array of points, translating the events further comprises transforming each point in the initial array of points into a movement-compensated point.

12. A method in accordance with Claim 11 wherein transforming each point in the initial array of points further comprises applying a rotation matrix to each point in the initial array of points to rotate each point in the initial array of points based on the real-world coordinates.

13. A method in accordance with Claim 10 further comprising weighting a signal associated with each translated event.

14. A method in accordance with Claim 13 wherein weighting a signal further comprises weighting the signal based on a certainty of the associated event.

15. A method in accordance with Claim 10 wherein a plurality of targets (228) are within a field of view (232) of the detector (218), said method further comprising translating the events for each target using real-world coordinates of each target to compensate for a relative motion between each target and the detector.

Figure 1

Figure 2

Figure 3

Figure 4

Figure 5

Figure 6

Figure 7

EP 2 378 314 A2

Figure 8

Figure 9

**EP 2 378 314 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 61323574 A